# EUROPÄISCHE PATENTSCHRIFT

(11) **EP 3 168 268 B1**
(45) Veröffentlichungstag und Bekanntmachung des Hinweises auf die Patenterteilung: **26.09.2018**
(21) Anmeldenummer: 15194534.2
(22) Anmeldetag: 13.11.2015
(51) Int. Cl.: C09D 5/16, C09D 5/44, C09D 183/10, C09D 179/08, H01B 13/06, H01B 3/30

(54) **ELEKTROISOLIERLACK UND VERFAHREN ZUR HERSTELLUNG EINES ELEKTROISOLIERLACKES**
ELECTRO-INSULATING VARNISH AND METHOD FOR PRODUCING SAME
VERNIS D'ISOLATION ÉLECTRIQUE ET PROCÉDÉ DE FABRICATION D'UN VERNIS D'ISOLATION ÉLECTRIQUE

(43) Veröffentlichungstag der Anmeldung: 17.05.2017
(73) Patentinhaber: Schwering & Hasse Elektrodraht GmbH, 32676 Lügde (DE)
(72) Erfinder: Reicher, Johann, 31848 Bad Münster (DE); Haase, Roxana, 31812 Bad Pyrmont (DE)
(74) Vertreter: Rohmann, Michael

(56) Entgegenhaltungen:
- DE-A1-102010 039 168
- US-A1- 2003 215 650
- CHRISTINE M. MAHONEY ET AL: "Surface Characterization and Adhesive Properties of Poly(imidesiloxane) Copolymers Containing Multiple Siloxane Segment Lengths", MACROMOLECULES, Bd. 35, Nr. 13, 1. Juni 2002 (2002-06-01), Seiten 5256-5266, XP055009880, ISSN: 0024-9297, DOI: 10.1021/ma010353y

## Beschreibung

Die Erfindung betrifft einen Elektroisolierlack, insbesondere für die Beschichtung von Drähten, wobei der Lack ein Basispolymer aufweist und wobei das Basispolymer mit polymeren Modifizierungseinheiten modifiziert ist. Die Erfindung betrifft weiterhin ein Verfahren zur Herstellung eines Elektroisolierlackes. - Derartige Elektroisolierlacke werden insbesondere zur Beschichtung von Drähten eingesetzt, welche Drähte als elektrische Leiter in elektrischen Bauteilen wie Spulen, Motoren und dergleichen verwendet werden. Der mit dem Elektroisolierlack beschichtete Draht wird insbesondere bei der Herstellung der elektrischen Bauteile aufgewickelt und zwar in der Regel mit Hilfe von Wickelmaschinen aufgewickelt.

Elektroisolierlacke der eingangs genannten Art und Verfahren solcher Elektroisolierlacke sind aus der Praxis grundsätzlich bekannt. Verwiesen werden kann hier beispielsweise auf WO 2012/020067 A1. Die mit dem Elektroisolierlack beschichteten elektrischen Drähte werden zweckmäßigerweise mit einer hohen Packungsdichte des Drahtes gewickelt bzw. in den zugeordneten elektrischen Bauteilen untergebracht. Eine solche Packungsdichte ist insbesondere zur Erzielung einer optimalen Induktionsleistung wünschenswert. Andererseits kann mittels einer hohen Packungsdichte auch das Volumen der elektrischen Bauteile deutlich reduziert werden. Zur Realisierung von hohen Packungsdichten ist eine hohe Gleitfähigkeit der Drähte wünschenswert. Gute Gleitfähigkeiten erleichtern auch ein Aufwickeln der beschichteten Drähte mit hoher Geschwindigkeit. Dabei trägt die gute Gleitfähigkeit dazu bei, dass die Drähte mechanisch wenig beansprucht werden bzw. so gut wie nicht beschädigt werden können. - Bei den aus der Praxis bekannten Elektroisolierlacken lässt die Gleitfähigkeit der beschichteten Drähte häufig zu wünschen übrig. Es wurden auch bereits Elektroisolierlacke entwickelt, die eine zufriedenstellende Gleitfähigkeit der beschichteten Drähte ermöglichen (siehe insbesondere WO 2012/020067 A1). Nichtsdestoweniger besteht weiterhin Verbesserungsbedarf.

Dementsprechend liegt der Erfindung das technische Problem zugrunde, einen Elektroisolierlack der eingangs genannten Art anzugeben, der eine hohe Gleitfähigkeit ermöglicht und auch ansonsten hervorragende mechanische und thermische Eigenschaften aufweist. Der Erfindung liegt fernerhin das technische Problem, ein Verfahren zur Herstellung eines solchen Elektroisolierlackes bereitzustellen.

Zur Lösung des technischen Problems lehrt die Erfindung einen Elektroisolierlack, insbesondere für die Beschichtung von Drähten, wobei der Lack ein Basispolymer aus der Gruppe "Polyamidimid, Polyesterimid, Polyester, Polyamid, Polyurethan, Polyimid, Polyesteramidimid, Polyepoxid" aufweist, wobei das Basispolymer mit polymeren Modifizierungseinheiten in Form von zumindest zwei verschiedenen Polysiloxanen modifiziert ist,
wobei zumindest zwei Polysiloxane eine unterschiedliche Anzahl an Si-Einheiten aufweisen, wobei die Anzahl der Si-Einheiten des längerkettigen Polysiloxans 1,5-mal bis 2,5-mal, bevorzugt 1,7-mal bis 2,3-mal so groß ist wie die Anzahl der SI-Einheiten des kürzerkettigen Polysiloxans,
wobei das längerkettige Polysiloxan 140 bis 200 Si-Einheiten aufweist, wobei das kürzerkettige Polysiloxan mehr als 65 Si-Einheiten und weniger als 110 Si-Einheiten aufweist und wobei die Viskosität des applikationsfähigen Lackes 650 bis 1500 mPa s, bevorzugt 800 bis 1350 mPa s und sehr bevorzugt 850 bis 1300 mPa s beträgt. Gemäß besonders empfohlener Ausführungsform der Erfindung beträgt die Viskosität des applikationsfähigen Lackes 900 bis 1250 mPa s und bevorzugt 950 bis 1200 mPa s. Nach einer sehr bevorzugten Ausführungsform der Erfindung liegt die Viskosität des applikationsfähigen Lackes zwischen 1000 und 1150 mPa s, vorzugsweise zwischen 1050 und 1150 mPa s, insbesondere bei 1100 bzw. bei etwa 1100 mPa s. Viskositäten werden im Rahmen der Erfindung im Platte-Kegel-Viskosimeter bei 23°C gemessen. Die Viskosität bezieht sich also auf den applikationsfähigen Lack und insbesondere auf den Lack in Form der mit einem Lösungsmittel verdünnten Polymerbestandteile bzw. festen Polymerbestandteile. Bei dem Lösungsmittel handelt es sich nach einer empfohlenen Ausführungsvariante um N-Methylpyrrolidon.

Es liegt im Rahmen der Erfindung, dass der Festkörperanteil des applikationsfähigen Lackes 22 bis 35 Gew.-%, bevorzugt 23 bis 33 Gew.-% und besonders bevorzugt 24 bis 31 Gew.-% beträgt. Es empfiehlt sich ganz besonders, dass der Festkörpergehalt des applikationsfähigen Lackes zwischen 25 und 30 Gew.-%, bevorzugt zwischen 26 und 29 Gew.-% liegt. Eine besonders bewährte Ausführungsform zeichnet sich dadurch aus, dass die Viskosität des applikationsfähigen Lackes 950 bis 1200 mPa s, bevorzugt 1000 bis 1150 mPa s, sehr bevorzugt 1050 bis 1150 mPa s und der Festkörpergehalt des applikationsfähigen Lackes 26 bis 28 Gew.-% beträgt.

Zweckmäßigerweise beträgt der Anteil der Polymerbausteine mit Modifizierungseinheiten bezogen auf das gesamte Polymer 10 bis 30 Gew.-%, bevorzugt 15 bis 25 Gew.-% und beispielsweise 20 Gew.-%. - Eine besonders empfohlene Ausführungsform der Erfindung ist dadurch gekennzeichnet, dass es sich bei den erfindungsgemäß eingesetzten Polysiloxanen um Polydialkylsiloxane, bevorzugt um Polydimethylsiloxane handelt. - Eine sehr bewährte Ausführungsform zeichnet sich dadurch aus, dass das Basispolymer mit polymeren Modifizierungseinheiten in Form von lediglich zwei verschiedenen Polysiloxanen bzw. Polysiloxanketten modifiziert ist.

Es liegt im Rahmen der Erfindung, dass die Anzahl der Si-Einheiten des längerkettigen Polysiloxans 143 bis 165 beträgt. Vorzugsweise ist die Anzahl der Si-Einheiten des längerkettigen Polysiloxans größer als 140, bevorzugt größer als 143 und sehr bevorzugt größer als 145. Si-Einheiten meint im Rahmen der Erfindung insbesondere Silicium-Einheiten mit jeweils einem Si-Atom. Gemäß einer besonders empfohlenen Ausführungsvariante des erfindungsgemäßen Elektroisolierlackes liegt die Anzahl der Si-Einheiten des längerkettigen Polysiloxans zwischen 145 und 160, besonders bevorzugt zwischen 146 und 155.

Erfindungsgemäß ist die Anzahl der Si-Einheiten des kürzerkettigen Polysiloxans größer als 65 und bevorzugt größer als 70 ist. Erfindungsgemäß ist fernerhin die Anzahl der Si-Einheiten des kürzerkettigen Polysiloxans kleiner als 110, vorzugsweise kleiner als 100 und bevorzugt kleiner als 90. Besonders bewährt hat sich eine Anzahl von 70 bis 80, vorzugsweise von 72 bis 78 Si-Einheiten für das kürzerkettige Polysiloxan.

Es liegt im Rahmen der Erfindung, dass das längerkettige Polysiloxan und/oder das kürzerkettige Polysiloxan ein lineares bzw. unverzweigtes Polysiloxan ist. Dann sind lineare Polysiloxanketten an das Basispolymer gebunden. Zweckmäßigerweise handelt es sich bei dem längerkettigen Polysiloxan und/oder bei dem kürzerkettigen Polysiloxan um ein Polydialkylsiloxan, bevorzugt um ein Polydimethylsiloxan. - Nach sehr empfohlener Ausführungsform der Erfindung ist das Basispolymer ein Polyamidimid und/oder ein Polyesterimid. Besonders bevorzugt handelt es sich bei dem Basispolymer um ein Polyamidimid. Sehr bewährt hat sich im Rahmen der Erfindung eine Ausführungsform, bei der sowohl das längerkettige Polysiloxan als auch das kürzerkettige Polysiloxan ein Polydialkylsiloxan, vorzugsweise ein Polydimethlysiloxan ist und bei der das Basispolymer ein Polyamidimid ist.

Zur Lösung des technischen Problems lehrt die Erfindung fernerhin ein Verfahren zur Herstellung eines Elektroisolierlackes, insbesondere eines Elektroisolierlackes für die Beschichtung von Drähten, wobei zumindest ein erstes Monomer mit zumindest einer ersten funktionellen Gruppe mit zumindest zwei Polysiloxanen mit unterschiedlicher Anzahl von Si-Einheiten und mit jeweils zumindest einer reaktiven Gruppe zu Polysiloxan-Zwischenprodukten umgesetzt wird. Vorzugsweise wird das zumindest eine erste Monomer mit der zumindest einen ersten funktionellen Gruppe mit lediglich zwei Polysiloxanen mit unterschiedlicher Anzahl von Si-Einheiten und mit jeweils zumindest einer reaktiven Gruppe zu den Polysiloxan-Zwischenprodukten umgesetzt. Die Polysiloxan-Zwischenprodukte werden anschließend mit zumindest einem zweiten Monomer mit zumindest einer zweiten funktionellen Gruppe umgesetzt. Das erste Monomer wird zunächst mit einem ersten Polysiloxan und anschließend nach einer Zeitspanne von mindestens 2 Minuten, vorzugsweise von mindestens 3 Minuten und bevorzugt von mindestens 4 Minuten mit einem zweiten Polysiloxan - zweckmäßigerweise unter Rühren - gemischt. Dabei unterscheiden sich die beiden Polysiloxane in der Anzahl ihrer Si-Einheiten um mindestens 50 Si-Einheiten, vorzugsweise um mindestens 55 Si-Einheiten, bevorzugt um mindestens 60 Si-Einheiten, sehr bevorzugt um mindestens 65 Si-Einheiten und besonders bevorzugt um mindestens 70 Si-Einheiten voneinander. Die beiden Polysiloxane weisen ein längerkettiges Polysiloxan mit 140 bis 200 Si-Einheiten sowie ein kürzerkettiges Polysiloxan mit mehr als 65 Si-Einheiten und weniger als 110 Si-Einheiten auf. Aus dem ersten Monomer und dem zweiten Monomer werden im Übrigen die Basispolymerketten gebildet, wobei zumindest ein Teil dieser Basispolymerketten mit Polysiloxan bzw. mit den Polysiloxanen (Polysiloxanketten) modifiziert ist. Diese Modifizierung der Basispolymerketten ergibt sich insbesondere dadurch, dass die mit den Polysiloxanen umgesetzten Monomeren an der Bildung der Basispolymerketten beteiligt sind.

Es liegt im Rahmen der Erfindung, dass die bei dem erfindungsgemäßen Verfahren eingesetzten Polysiloxane jeweils zumindest eine - vorzugsweise jeweils zumindest zwei - reaktive Gruppe (n) aus der Gruppe "Hydroxy-Gruppe (-OH), Carboxylgruppe (-COOH), Amin-Gruppe (-NH₂)" aufweisen. Besonders bevorzugt ist dabei die Hydroxy-Gruppe (-OH). Empfohlenermaßen weist jedes Polysiloxan zwei reaktive Gruppen auf. Vorzugsweise ist an jedem Kettenende von den beiden Kettenenden eines Polysiloxans bzw. jedes Polysiloxans eine reaktive Gruppe angeschlossen und zwar bevorzugt eine reaktive Gruppe aus der vorstehenden Auswahl. Es empfiehlt sich, dass die beiden reaktiven Gruppen eines Polysiloxans identisch sind und es hat sich besonders bewährt, dass alle reaktiven Gruppen an den Kettenenden der Polysiloxane bzw. der beiden Polysiloxane identisch sind. Es liegt im Rahmen der Erfindung, dass die Polysiloxane über ihre reaktiven Gruppen bzw. über ihre reaktiven Endgruppen mit dem Basispolymer verknüpft sind. - Zweckmäßigerweise ist das längerkettige Polysiloxan und/oder das kürzerkettige Polysiloxan als lineares, unverzweigtes Polysiloxan ausgebildet und bevorzugt ist an jedem Kettenende des längerkettigen Polysiloxans und/oder des kürzerkettigen Polysiloxans eine reaktive Gruppe angeschlossen und zwar bevorzugt eine reaktive Gruppe aus der vorstehend herausgestellten Auswahl. - Nach einer Ausführungsform, der im Rahmen der Erfindung besondere Bedeutung zukommt, ist die Hydroxy-Gruppe als Hydroxyalkyl-Gruppe (-R-OH) oder besonders bevorzugt als Hydroxyalkoxy-Gruppe (-R-O-R-OH) ausgebildet, wobei R für einen Alkylrest steht. Empfohlenermaßen weist das längerkettige Polysiloxan und/oder das kürzerkettige Polysiloxan jeweils zwei Hydroxy-Gruppen, bevorzugt Hydroxyalkoxy-Gruppen auf. Es liegt im Rahmen der Erfindung, dass das längerkettige Polysiloxan und/oder das kürzerkettige Polysiloxan als lineares unverzweigtes Polysiloxan ausgebildet ist und das an jedem Kettenende des Polysiloxans eine Hydroxy-Gruppe, bevorzugt eine Hydroxyalkoxy-Gruppe als reaktive Gruppe angeschlossen ist. - Eine besonders empfohlene Ausführungsform der Erfindung ist dadurch gekennzeichnet, dass das längerkettige Polysiloxan und/oder das kürzerkettige Polysiloxan jeweils identische reaktive Gruppen an ihren Kettenenden aufweisen und das vorzugsweise an den beiden Kettenenden eines linearen unverzweigten Polysiloxans zwei identische Hydroxyalkoxy-Gruppen als reaktive Gruppen angeschlossen sind.

Es liegt weiterhin im Rahmen der Erfindung, dass zunächst das erste Monomer mit einem der beiden Polysiloxane - vorzugsweise mit dem kürzerkettigen Polysiloxan - gemischt wird. Es empfiehlt sich, dass dabei das erste Monomer in zumindest einem Lösungsmittel gelöst ist. Vorzugsweise ist das erste Monomer mit zwei ersten funktionellen Gruppen ausgestattet. Bei dem ersten Monomer handelt es sich gemäß einer bewährten Ausführungsform um ein Diisocyanat, bevorzugt um ein aromatisches Diisocyanat und besonders bevorzugt um Methylendiphenylisocyanat (MDI). Das erste Monomer bzw. das Diisocyanat bzw. das MDI wird bevorzugt in N-Methylpyrrolidon (NMP) als Lösungsmittel gelöst. Die Lösung des Diisocyanats bzw. des MDI's in dem zumindest einem Lösungsmittel wird bei einer Temperatur von 30 bis 45°C, vorzugsweise bei einer Temperatur von 35 bis 45°C gehalten. Zweckmäßigerweise wird dabei die Temperatur von 45°C nicht überschritten.

Anschließend wird ein Polysiloxan, vorzugsweise das kürzerkettige Polysiloxan zugefügt. Es liegt im Rahmen der Erfindung, dass das erste Monomer im Vergleich zu dem Polysiloxan bzw. im Vergleich zu dem kürzerkettigen Polysiloxan im Überschuss vorgelegt bzw. zugesetzt wird. Empfohlenermaßen beträgt die Stoffmenge (in Mol) des ersten Monomers mindestens das 50-fache, bevorzugt mindestens das 80-fache, sehr bevorzugt zumindest das 90-fache und besonders bevorzugt mindestens das 100-fache der Stoffmenge (in Mol) des Polysiloxans bzw. des kürzerkettigen Polysiloxans. Es empfiehlt sich, dass die Stoffmenge (in Mol) des ersten Monomers maximal das 200-fache, bevorzugt maximal das 170-fache und besonders bevorzugt maximal das 150-fache der Stoffmenge (in Mol) des Polysiloxans bzw. des kürzerkettigen Polysiloxans beträgt. Zweckmäßigerweise wird das Polysiloxan bzw. das kürzerkettige Polysiloxan zunächst in einem Lösungsmittel insbesondere in einem unpolaren Lösungsmittel - beispielsweise in Xylol - gelöst. Anschließend wird diese Lösung des Polysiloxans / kürzerkettigen Polysiloxans zu der Lösung des ersten Monomers - vorzugsweise zu der Lösung des MDI - hinzugefügt.

Es liegt im Rahmen der Erfindung, dass nach dem Mischen des ersten Monomers mit dem ersten Polysiloxan die daraus resultierende Mischung mit dem zweiten Polysiloxan - vorzugsweise mit dem längerkettigen Polysiloxan - gemischt wird. Gemäß besonders empfohlener Ausführungsform liegt das erste Monomer (bzw. die Ausgangsmenge des ersten Monomers vor dem Mischen mit dem ersten Polysiloxan) im Überschuss bezüglich dieses zweiten Polysiloxans vor. Es empfiehlt sich, dass die Stoffmenge (in Mol) des anfänglich zugesetzten ersten Monomers (Ausgangsmenge des ersten Monomers) mindestens das 100-fache, bevorzugt mindestens das 150-fache, sehr bevorzugt mindestens das 180-fache und besonders bevorzugt mindestens das 200-fache der Stoffmenge (in Mol) des zweiten Polysiloxans beträgt. Empfohlenermaßen beträgt die Stoffmenge (in Mol) des ersten Monomers (Ausgangsmenge des ersten Monomers) maximal das 350-fache, bevorzugt maximal das 300-fache und besonders bevorzugt maximal das 280-fache der Stoffmenge (in Mol) des zweiten Polysiloxans. Zweckmäßigerweise wird das zweite Polysiloxan - bevorzugt das längerkettige Polysiloxan - zunächst in einem Lösungsmittel, bevorzugt in einem unpolaren Lösungsmittel - beispielsweise in Xylol - gelöst und in dieser Form der Mischung zugegeben.

Es empfiehlt sich, dass das Massenverhältnis der beiden Polysiloxane zueinander 40:60 bis 60:40 und bevorzugt 50:50 bzw. in etwa 50:50 beträgt. - Vorzugsweise wird nach der Zugabe der beiden Polysiloxane bzw. der Lösungen der beiden Polysiloxane die gesamte Mischung auf eine Temperatur von 50 bis 80°C, bevorzugt auf eine Temperatur von 60 und 75°C und besonders bevorzugt auf eine Temperatur zwischen 65 und 70°C, beispielsweise auf eine Temperatur von 70°C erhitzt. Die gesamte Mischung wird zweckmäßigerweise über einen Zeitraum von 30 Minuten bis 90 Minuten, bevorzugt über einen Zeitraum von 40 Minuten bis 80 Minuten und besonders bevorzugt über einen Zeitraum von 50 Minuten bis 70 Minuten, beispielsweise über einen Zeitraum von 60 Minuten bei der genannten Temperatur - insbesondere bei 70°c - gehalten. Zweckmäßigerweise wird die Mischung dabei gerührt. Empfohlenermaßen wird erst im Anschluss an diese Erwärmung bzw. Erhitzung das zweite Monomer zu der Mischung zugegeben. Vorzugsweise entspricht das Verhältnis der Stoffmenge (in Mol) des eingesetzten zweiten Monomers zur Stoffmenge des (ursprünglich eingesetzten) ersten Polysiloxans oder zur Stoffmenge des (ursprünglich eingesetzten) zweiten Polysiloxans dem oben spezifizierten Verhältnis der Stoffmenge des ersten Monomers zur Stoffmenge des ersten Polysiloxans bzw. zweiten Polysiloxans. Es empfiehlt sich, ein zweites Monomer mit zwei zweiten funktionellen Gruppen zu verwenden. - Als zweites Monomer wird gemäß einer bewährten Ausführungsform ein Tricarbonsäureanhydrid eingesetzt und nach besonders empfohlener Ausführungsform Trimellithsäureanhydrid (TMA) eingesetzt. - Grundsätzlich liegt es auch im Rahmen der Erfindung, dass bei der oben beschriebenen Verfahrensweise das Tricarbonsäureanhydrid, insbesondere das Trimellithsäureanhydrid (TMA) als erstes Monomer eingesetzt wird und dass das Diisocyanat bzw. das aromatische Diisocyanat, insbesondere das Methylendiphenyliisocyanat (MDI) als zweites Monomer eingesetzt wird.

Zweckmäßigerweise wird die Mischung nach dem Zusatz des zweiten Monomers weiterhin bei der vorgenannten Temperatur - beispielsweise bei 70°C - gehalten und zwar empfohlenermaßen über einen Zeitraum von 30 bis 90 Minuten, bevorzugt über einen Zeitraum von 40 bis 80 Minuten und besonders bevorzugt über einen Zeitraum von 50 bis 70 Minuten. Vorzugsweise wird die Mischung dabei gerührt. - Im Anschluss daran wird die Temperatur der Mischung nach bewährter Ausführungsform auf eine höhere Temperatur erhitzt und zwar bevorzugt auf eine Temperatur zwischen 80°C und 115°C, vorzugsweise auf eine Temperatur zwischen 90°C und 110°C bevorzugt auf eine Temperatur zwischen 95°c und 105°c, beispielsweise auf 100°C. Empfohlenermaßen wird die Mischung für einen Zeitraum von 30 Minuten bis 90 Minuten, sehr bevorzugt für einen Zeitraum von 40 bis 80 Minuten und besonders bevorzugt für einen Zeitraum von 50 bis 70 Minuten, beispielsweise für einen Zeitraum von 60 Minuten - bei der genannten Temperatur gehalten.

Es empfiehlt sich, dass nach der Zugabe des zweiten Monomers und bevorzugt nach der vorstehend beschriebenen Temperaturbehandlung bzw. nach den vorstehend beschriebenen Temperaturbehandlungen die Mischung (weiter) auf eine Temperatur zwischen 110 bis 120°C erhitzt wird, insbesondere auf eine Temperatur von 115°C bzw. etwa 115°C erhitzt wird. Vorzugsweise wird die Mischung über einen Zeitraum von mindestens 90 Minuten und besonders bevorzugt mindestens 100 Minuten bei der vorstehend genannten Temperatur gehalten. Gemäß einer besonders empfohlenen Ausführungsform wird die Mischung für einen Zeitraum von 100 bis 140 Minuten - beispielsweise für einen Zeitraum von 120 Minuten bzw. von etwa 120 Minuten - bei der genannten Temperatur gehalten. Zweckmäßigerweise wird die Mischung so lange bei dieser erhöhten Temperatur gehalten, bis - bei Einsatz eines Diisocyanates als Monomer bzw. als erstes Monomer - Isocyanat nicht mehr nachweisbar ist, insbesondere eine Isocyanatbande im IR-Spektrum nicht mehr nachweisbar ist. - Vorzugsweise wird die Mischung im Anschluss daran auf eine noch höhere Temperatur erhitzt, empfohlenermaßen auf eine Temperatur zwischen 115 und 145°C, bevorzugt zwischen 120 und 140°C, insbesondere auf eine Temperatur von 130°C bzw. etwa 130°C erhitzt. Es liegt im Rahmen der Erfindung, dass die Mischung so lange bei dieser Temperatur gehalten wird - vorzugsweise unter Rühren bei dieser Temperatur gehalten wird - bis die Mischung im abgekühlten Zustand eine Viskosität von 25.000 bis 45.000 mPa s, bevorzugt von 30.000 bis 40.000 mPa s und sehr bevorzugt von 32.000 bis 38.000 mPa s aufweist. Die vorgenannte Viskosität wird insbesondere bei einer Temperatur von 30°C (abgekühlter Zustand) gemessen.

Es liegt im Rahmen der Erfindung, dass die Mischung im Anschluss daran zu dem applikationsfähigen Lack bzw. Elektroisolierlack verdünnt wird, so dass der Lack die erfindungsgemäße Viskosität aufweist. Die Verdünnung erfolgt vorzugsweise mit N-Methylpyrrolidon (NMP). - Beim Aufbringen des erfindungsgemäßen Lackes auf einen Gegenstand - insbesondere auf einen leitfähigen Draht - erfolgt ein Einbrennen des Lackes und zwar bevorzugt bei einer Einbrenntemperatur von 400 bis 850°C und besonders bevorzugt bei einer Einbrenntemperatur von 450 bis 800°C. Im aufgebrachten bzw. eingebrannten Zustand ist der erfindungsgemäße Lack nicht transparent und matt ausgebildet.

Gegenstand der Erfindung ist weiterhin ein Draht bzw. ein leitfähiger Draht, der mit einem erfindungsgemäßen Elektroisolierlack beschichtet ist. Es liegt im Rahmen der Erfindung, dass es sich bei dem leitfähigen bzw. elektrisch leitfähigen Draht um einen Metalldraht handelt. Nach besonders empfohlener Ausführungsform ist der Metalldraht als Kupferdraht ausgebildet. Vorzugsweise besteht der erfindungsgemäße Draht aus Kupfer bzw. im Wesentlichen aus Kupfer und/oder aus Aluminium bzw. im Wesentlichen aus Aluminium. - Es liegt fernerhin im Rahmen der Erfindung, dass der erfindungsgemäße Elektroisolierlack die äußere Schicht der Beschichtung des Drahtes bildet. Auf dem Draht ist zweckmäßigerweise bereits zumindest eine Lackschicht vorhanden und der erfindungsgemäße Elektroisolierlack wird dann auf diese zumindest eine Lackschicht aufgebracht. Es liegt im Rahmen der Erfindung, dass der erfindungsgemäße Elektroisolierlack nach dem Aufbringen einem Einbrennprozess unterzogen wird. Dabei wird zweckmäßigerweise mit Einbrenntemperaturen zwischen 400 und 850°C, bevorzugt 450 bis 800°C gearbeitet.

Gegenstand der Erfindung ist auch ein Aggregat, insbesondere eine Spule, ein Elektromotor oder dergleichen mit einem erfindungsgemäßen Draht bzw. mit einem erfindungsgemäß beschichteten Draht. Auf einer Spule ist dann wie üblich eine Vielzahl von Wicklungen des erfindungsgemäßen Drahtes aufgebracht. Dabei kann aufgrund der erfindungsgemäßen Eigenschaften des Elektroisolierlackes bzw. eines damit beschichteten Drahtes eine überraschend hohe Packungsdichte des Drahtes realisiert werden.

Es liegt im Rahmen der Erfindung, dass die erfindungsgemäße Elektroisolierlackbeschichtung dieses Drahtes keinerlei zusätzliche Gleitmittel bzw. keinerlei "externe" Gleitmittel aufweist. Der Elektroisolierlack ist somit gleitmittelfrei ausgeführt. Gleiteigenschaften werden hier erfindungsgemäß lediglich durch die mit dem Polysiloxan modifizierten Basispolymerketten zur Verfügung gestellt. Gemäß besonders bevorzugter Ausführungsform der Erfindung ist ein mit dem erfindungsgemäßen Elektroisolierlack beschichteter Draht zumindest außen bzw. an seiner Außenoberfläche völlig gleitmittelfrei ausgebildet.

Der Erfindung liegt die Erkenntnis zugrunde, dass mit dem erfindungsgemäßen Elektroisolierlack eine überraschend hohe Gleitfähigkeit des beschichteten Drahtes erzielt werden kann. Gegenüber herkömmlichen Lackbeschichtungen von Drähten zeichnet sich die erfindungsgemäße Lackbeschichtung durch eine erhebliche Verminderung des Reibungswiderstandes der Beschichtung aus. Der Erfindung liegt weiterhin die Erkenntnis zugrunde, dass beim Aushärten des erfindungsgemäßen Lackes eine Selbststrukturierung der Oberfläche des Lackes stattfindet, da die erfindungsgemäßen Modifizierungseinheiten mit dem Basispolymer unverträglich sind. Deshalb ergibt sich an der Oberfläche des Elektroisolierlackes eine Phasentrennung und die Phasentrennung bedingt die hervorragende Gleitfähigkeit der Lackbeschichtung bzw. des Drahtes. Gegenüber den aus dem Stand der Technik bislang bekannten Elektroisolierlacken bzw. den damit beschichteten Drähten zeichnet sich die Erfindung durch eine nochmalige überraschend erhebliche Verbesserung der Gleiteigenschaften aus. Kritisch für diesen erfindungsgemäßen Erfolg ist einerseits der erfindungsgemäße Einsatz der beiden Polysiloxane unterschiedlicher Kettenlänge und andererseits auch die Viskosität bzw. der Festkörpergehalt des applikationsfähigen Lackes. Vor allem auch die erfindungsgemäß eingestellte Viskosität des applikationsfähigen Lackes bedingt in Kombination mit dem Einsatz der beiden unterschiedlichen Polysiloxane eine besonders günstige Phasentrennung an den Oberflächen. Weiterhin ist hervorzuheben, dass zugleich auch die thermischen Eigenschaften des erfindungsgemäßen Elektroisolierlackes allen Anforderungen genügen und die erfindungsgemäßen Lackbeschichtungen weisen insbesondere eine hohe Temperaturbeständigkeit auf. Fernerhin sind sie überraschend mechanisch resistent und weisen auch eine hohe Flexibilität auf. Aufgrund der überraschend hohen Gleitfähigkeit des Elektroisolierlackes können die mit dem Lack beschichteten Drähte problemlos mit hohen Geschwindigkeiten aufgewickelt werden und insbesondere auch automatisch mit Wickelmaschinen aufgewickelt werden. Mit den erfindungsgemäß beschichteten Drähten kann eine überraschend hohe Packungsdichte beim Wickeln des Drahtes erreicht werden und dadurch werden wiederum optimale Induktionseigenschaften sowie eine vorteilhafte Volumenreduzierung erzielt. Hervorzuheben ist weiterhin, dass das erfindungsgemäße Verfahren mit einfachen und kostengünstigen Maßnahmen arbeitet.

Es wurde bereits weiter oben dargelegt, dass nach besonders empfohlener Ausführungsform der Erfindung ein Elektroisolierlack auf Basis von Polyamidimid bereitgestellt wird. Dabei wird das Basispolymer also durch Polyamidimid gebildet und dieses Polyamidimid ist mit polymeren Modifizierungseinheiten in Form von zumindest zwei bzw. in Form von zwei verschiedenen Polysiloxanketten modifiziert. Es liegt dann im Rahmen der Erfindung, dass bei dem Herstellungsverfahren als Monomere ein Diisocyanat bzw. Methylendiphenyliisocyanat (MDI) und ein Tricarbonsäureanhydrid bzw. Trimellitsäureanhydrid (TMA) eingesetzt werden.

Als längerkettiges Polysiloxan und als kürzerkettiges Polysiloxan werden empfohlenermaßen jeweils lineare unverzweigte Polysiloxane eingesetzt und diese Polysiloxane weisen vorzugsweise an jedem ihrer beiden Kettenenden eine reaktive Gruppe auf. Die reaktiven Gruppen eines Polysiloxans und bevorzugt aller beiden Polysiloxane sind nach empfohlener Ausührungsform der Erfindung identisch. Eine sehr bewährte Ausführungsform der Erfindung ist dadurch gekennzeichnet, dass die reaktive Gruppe in Form einer Hydroxygruppe vorliegt und besonders bevorzugt in Form einer Hydroxyalkoxy-Gruppe (-R₁-O-R₂-OH) vorliegt. Empfohlenermaßen sind dabei alle reaktiven Gruppen des längerkettigen Polysiloxans und des kürzerkettigen Polysiloxans als Hydroxyalkoxy-Gruppe ausgebildet. Eine im Rahmen der Erfindung ganz besonders bevorzugte Polysiloxanstruktur ist wie folgt aufgebaut:

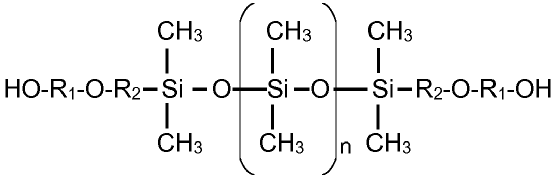

Diese Polysiloxanstruktur weist also an jedem Kettenende eine Hydroxyalkoxy-Gruppe auf. R₁ und R₂ stehen hier jeweils für einen Alkylrest bzw. Alkylenrest. Dabei können R₁ und R₂ identisch sein oder auch voneinander verschieden sein. Vorzugsweise wird ein solches Polysiloxan mit dieser Polysiloxanstruktur sowohl für das längerkettige Polysiloxan als auch für das kürzerkettige Polysiloxan eingesetzt. n wird unten näher spezifiziert. - Eine im Rahmen der Erfindung besonders empfohlene Polysiloxanstruktur zeigt den folgenden Aufbau:

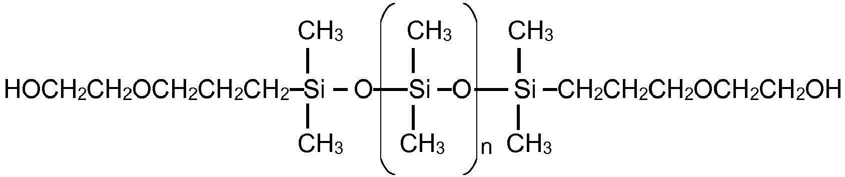

Empfohlenermaßen wird diese Polysiloxanstruktur sowohl für das längerkettige als auch für das kürzerkettige Polysiloxan eingesetzt.

Dabei handelt es sich um ein α,ω-Hydroxy-terminiertes Polydialkylsiloxan. Dabei liegt n für das längerkettige Polysiloxan zwischen 140 und 170. Fernerhin liegt n für das kürzerkettige Polysiloxan zwischen 70 und 80. Bei n handelt es sich um die Anzahl der Silicium-Einheiten bzw. um die Anzahl der Si-Einheiten.

## Patentansprüche

1. Elektroisolierlack, insbesondere für die Beschichtung von Drähten, wobei der Lack ein Basispolymer aus der Gruppe "Polyamidimid, Polyesterimid, Polyester, Polyamid, Polyurethan, Polyimid, Polyesteramidimid, Polyepoxid" aufweist, wobei das Basispolymer mit polymeren Modifizierungseinheiten in Form von zumindest zwei verschiedenen Polysiloxanen modifiziert ist,
wobei zwei Polysiloxane eine unterschiedliche Anzahl an Si-Einheiten aufweisen, wobei die Anzahl der Si-Einheiten des längerkettigen Polysiloxans 1,5 mal bis 2,5 mal, bevorzugt 1,7 mal bis 2,3 mal so groß ist wie die Anzahl der Si-Einheiten des kürzerkettigen Polysiloxans,
wobei das längerkettige Polysiloxan 140 bis 200 Si-Einheiten aufweist, wobei das kürzerkettige Polysiloxan mehr als 65 Si-Einheiten und weniger als 110 Si-Einheiten aufweist und wobei die Viskosität des (applikationsfähigen) Lackes 650 bis 1500 mPa s, bevorzugt 800 bis 1350 mPa s und sehr bevorzugt 850 bis 1300 mPa s beträgt.

2. Elektroisolierlack nach Anspruch 1, wobei die Viskosität des (applikationsfähigen) Lackes 900 bis 1250 mPa s und bevorzugt 950 bis 1200 mPa s beträgt.

3. Elektroisolierlack nach einem der Ansprüche 1 oder 2, wobei der Festkörperanteil des (applikationsfähigen) Lackes 22 bis 35 Gew.-%, bevorzugt 23 bis 33 Gew.-% und besonders bevorzugt 24 bis 31 Gew.-% beträgt.

4. Elektroisolierlack nach einem der Ansprüche 1 bis 3, wobei der Anteil der polymeren Modifizierungseinheiten bzw. der Polysiloxane im modifizierten Basispolymer 10 bis 30 Gew.-%, bevorzugt 15 bis 25 Gew.-% beträgt.

5. Elektroisolierlack nach einem der Ansprüche 1 bis 4, wobei die Anzahl der Si-Einheiten des längerkettigen Polysiloxans 143 bis 165 beträgt und bevorzugt größer als 140 und sehr bevorzugt größer als 145 ist.

6. Elektroisolierlack nach einem der Ansprüche 1 bis 5, wobei die Anzahl der Si-Einheiten des kürzerkettigen Polysiloxans größer als 70 ist.

7. Elektroisolierlack nach einem der Ansprüche 1 bis 6, wobei das längerkettige Polysiloxan und/oder das kürzerkettige Polysiloxan ein lineares bzw. unverzweigtes Polysiloxan ist.

8. Elektroisolierlack nach einem der Ansprüche 1 bis 7, wobei das Basispolymer ein Polyamidimid und/oder ein Polyesterimid ist.

9. Verfahren zur Herstellung eines Elektroisolierlackes, insbesondere eines Elektroisolierlackes nach einem der Ansprüche 1 bis 8 und insbesondere eines Elektroisolierlackes für die Beschichtung von Drähten, wobei zumindest ein erstes Monomer mit zumindest einer ersten funktionellen Gruppe mit zumindest zwei Polysiloxanen mit unterschiedlicher Anzahl von Si-Einheiten und mit jeweils zumindest einer reaktiven Gruppe zu Polysiloxan-Zwischenprodukten umgesetzt wird und wobei die Polysiloxan-Zwischenprodukte anschließend mit zumindest mit einem zweiten Monomer mit zumindest einer zweiten funktionellen Gruppe umgesetzt werden,
wobei das erste Monomer zunächst mit einem ersten Polysiloxan und anschließend nach einer Zeitspanne von mindestens 2 Minuten, vorzugsweise von mindestens 4 Minuten mit einem zweiten Polysiloxan - zweckmäßigerweise unter Rühren - gemischt wird, wobei sich die beiden Polysiloxane in der Anzahl ihrer Si-Einheiten um mindestens 50 Si-Einheiten, vorzugsweise um zumindest 60 Si-Einheiten voneinander unterscheiden, wobei die beiden Polysiloxane ein längerkettiges Polysiloxan mit 140 bis 200 Si-Einheiten sowie ein kürzerkettiges Polysiloxan mit mehr als 65 Si-Einheiten und weniger als 110 Si-Einheiten aufweisen,
und wobei aus dem ersten Monomer und dem zweiten Monomer Basispolymerketten gebildet werden, wobei zumindest ein Teil dieser Basispolymerketten mit einem Polysiloxan bzw. mit den Polysiloxanen (Polysiloxanketten) modifiziert sind.

10. Verfahren nach Anspruch 9, wobei die Polysiloxane jeweils zumindest eine - vorzugsweise jeweils zumindest zwei - reaktive Gruppe(n) aus der Gruppe "Hydroxy-Gruppe (-OH), Carboxylgruppe (-COOH), Amin-Gruppe (-NH₂)" aufweisen.

11. Verfahren nach einem der Ansprüche 9 oder 10, wobei zumindest das erste Monomer mit einem der beiden Polysiloxane - vorzugsweise mit dem kürzerkettigen Polysiloxan - gemischt wird, wobei das erste Monomer im Überschuss vorgelegt bzw. zugesetzt wird und wobei empfohlenermaßen die Stoffmenge (in Mol) des ersten Monomers mindestens das 50-fache, bevorzugt mindestens das 80-fache und besonders bevorzugt mindestens das 100-fache der Stoffmenge (in Mol) des kürzerkettigen Polysiloxans beträgt.

12. Verfahren nach Anspruch 11, wobei nach dem Mischen des ersten Monomers mit einem bzw. mit dem ersten Polysiloxan anschließend die daraus resultierende Mischung mit dem anderen bzw. dem zweiten Polysiloxan - vorzugsweise mit dem längerkettigen Polysiloxan - gemischt wird, wobei das erste Monomer auch im Überschuss bezüglich dieses zweiten Polysiloxans vorliegt und wobei empfohlenermaßen die Stoffmenge (in Mol) des anfänglich zugesetzten ersten Monomers mindestens das 100-fache, bevorzugt mindestens das 150-fache und besonders bevorzugt mindestens das 180-fache der Stoffmenge (in Mol) des zweiten längerkettigen Polysiloxans beträgt.

13. Verfahren nach einem der Ansprüche 9 bis 12, wobei mindestens ein Polysiloxan - vorzugsweise zwei bzw. beide Polysiloxane - in Form einer Lösung des Polysiloxans in einem Lösungsmittel, vorzugweise in einem unpolaren Lösungsmittel - insbesondere in Xylol als Lösungsmittel - eingesetzt wird.

14. Verfahren nach einem der Ansprüche 9 bis 13, wobei nach der Zugabe des zweiten Monomers die gesamte Mischung (Reaktionsmischung) über einen Zeitraum von mindestens 90 min, vorzugsweise mindestens 100 min, auf einer Temperatur von 110 bis 120° C gehalten wird.

15. Verfahren nach einem der Ansprüche 9 bis 14, wobei nach der Zugabe des zweiten Monomers die gesamte Mischung (Reaktionsmischung) solange bei erhöhter Temperatur gehalten wird - vorzugsweise bei einer Temperatur zwischen 110 und 120° C gehalten wird - bis die erste funktionelle Gruppe des ersten Monomers nicht mehr nachweisbar ist.

16. Verfahren nach Anspruch 15, wobei nach der Zugabe des zweiten Monomers die gesamte Mischung (Reaktionsmischung) solange bei erhöhter Temperatur gehalten wird - vorzugsweise bei einer Temperatur zwischen 110 und 120° C gehalten wird - bis - bei Einsatz eines Diisocyanates als erstes Monomer - Isocyanat nicht mehr nachweisbar ist, insbesondere eine Isocyanatbande im IR-Spektrum nicht mehr nachweisbar ist.

17. Verfahren nach einem der Ansprüche 9 bis 16, wobei die Mischung nach der Zugabe des zweiten Monomers - und vorzugsweise nach Behandlung gemäß den Patentansprüchen 15 und/oder 16 - bei einer Temperatur von 125 bis 135° C gehalten wird, bis die Mischung im abgekühlten Zustand eine Viskosität von 25.000 bis 45.000 mPa s, bevorzugt von 30.000 bis 40.000 mPa s und besonders bevorzugt von 32.000 bis 38.000 mPa s aufweist.

18. Draht, insbesondere leitfähiger Draht, beschichtet mit einem Elektroisolierlack nach einem der Ansprüche 1 bis 8 und/oder mit einem Elektroisolierlack, hergestellt nach einem Verfahren gemäß den Ansprüchen 9 bis 17.

19. Aggregat, insbesondere Spule mit einem Draht bzw. mit einem leitfähigen Draht nach Anspruch 18.

## Claims

1. An electro-insulating varnish, in particular for coating wires, wherein the varnish has a base polymer from the group "polyamide imide, polyester imide, polyester, polyamide, polyurethane, polyimide, polyester amide imide, polyepoxide", wherein the base polymer is modified with polymer modification units in the form of at least two different polysiloxanes,
wherein two polysiloxanes have a different number of Si units, wherein the number of Si units of the longer chain polysiloxane is 1.5 to 2.5 times, preferably 1.7 to 2.3 times, as great as the number of Si units of the shorter chain polysiloxane,
wherein the longer chain polysiloxane has 140 to 200 Si units, wherein the shorter chain polysiloxane has more than 65 Si units and fewer than 110 Si units and wherein the viscosity of the (application-capable) varnish is 650 to 1500 mPa s, preferably 800 to 1350 mPa s and very preferably 850 to 1300 mPa s.

2. The electro-insulating varnish according to claim 1, wherein the viscosity of the (application-capable) varnish is 900 to 1250 mPa s and preferably 950 to 1200 mPa s.

3. The electro-insulating varnish according to one of claims 1 or 2, wherein the solid fraction of the (application-capable) varnish is 22 to 35 % by wt., preferably 23 to 33 % by wt. and particularly preferably 24 to 31 % by wt.

4. The electro-insulating varnish according to one of claims 1 to 3, wherein the fraction of polymer modification units or of polysiloxanes in the modified base polymer is 10 to 30 % by wt., preferably 15 to 25 % by wt.

5. The electro-insulating varnish according to one of claims 1 to 4, wherein the number of Si units of the longer-chain polysiloxane is 143 to 165 and preferably greater than 140 and very preferably greater than 145.

6. The electro-insulating varnish according to one of claims 1 to 5, wherein the number of Si units of the shorter-chain polysiloxane is greater than 70.

7. The electro-insulating varnish according to one of claims 1 to 6, wherein the longer-chain polysiloxane and/or the shorter-chain polysiloxane is/are a linear or unbranched polysiloxane.

8. The electro-insulating varnish according to one of claims 1 to 7, wherein the base polymer is a polyamide imide and/or a polyester imide.

9. A method of producing an electro-insulating varnish, in particular an electro-insulating varnish according to one of claims 1 to 8 and, in particular, an electro-insulating varnish for coating wires, wherein at least a first monomer with at least a first functional group with at least two polysiloxanes with a different number of Si units and with at least one reactive group in each case is converted into polysiloxane intermediate products and wherein the polysiloxane intermediate products are then converted with at least a second monomer with at least a second functional group,
wherein the first monomer is initially mixed with a first polysiloxane and then, after an interval of at least 2 minutes, preferably of at least 4 minutes, with a second polysiloxane - advantageously while stirring - wherein the two polysiloxanes differ from one another in the number of their Si units by at least 50 Si units, preferably by at least 60 Si units, wherein the two polysiloxanes have a longer chain polysiloxane with 140 to 200 Si units and also a shorter chain polysiloxane with more than 65 Si units and fewer than 110 Si units,
and wherein base polymer chains are created from the first monomer and the second monomer, wherein at least some of these base polymer chains are modified with a polysiloxane or with the polysiloxanes (polysiloxane chains).

10. The method according to claim 9, wherein the polysiloxanes each have at least one - preferably at least two - reactive group(s) from the group "Hydroxy group (-OH), carboxyl group (-COOH), amine group (-NH₂)".

11. The method according to one of claims 9 or 10, wherein at least the first monomer is mixed with one of the two polysiloxanes - preferably with the shorter chain polysiloxane, wherein the first monomer is present or added in excess and wherein it is recommended for the substance quantity (in mol) of the first monomer to be at least 50 times, preferably at least 80 times and particularly preferably at least 100 times the substance quantity (in mol) of the shorter chain polysiloxane.

12. The method according to claim 11, wherein after the mixing of the first monomer with a or with the first polysiloxane, the resulting mixture is then mixed with the other or the second polysiloxane - preferably with the longer chain polysiloxane, wherein the first monomer is also present in excess in relation to the second polysiloxane and wherein it is recommended for the substance quantity (in mol) of the initially added first monomer to be at least 100 times, preferably at least 150 times and particularly preferably at least 180 times the substance quantity (in mol) of the second longer chain polysiloxane.

13. The method according to one of claims 9 to 12, wherein at least one polysiloxane - preferably two or both polysiloxanes - is/are used in the form of a solution of the polysiloxane in a solvent, preferably in a nonpolar solvent - in particular in xylene as the solvent.

14. The method according to one of claims 9 to 13, wherein following the addition of the second monomer, the entire mixture (reaction mixture) is held at a temperature of 110 to 120 °C for a period of at least 90 min, preferably of at least 100 min.

15. The method according to one of claims 9 to 14, wherein following the addition of the second monomer the entire mixture (reaction mixture) is held at an increased temperature - preferably at a temperature of between 110 and 120 °C - until the first functional group of the first monomer is no longer detectable.

16. The method according to claim 15, wherein following the addition of the second monomer the entire mixture (reaction mixture) is held at an increased temperature - preferably at a temperature between 110 and 120 °C - until - when a diisocyanate is used as the first monomer - isocyanate can no longer be detected, in particular an isocyanate band in the IR spectrum is no longer detectable.

17. The method according to one of claims 9 to 16, wherein following the addition of the second monomer - and preferably following treatment according to patent claims 15 and/or 16 - the mixture is held at a temperature of 125 to 135 °C until the mixture exhibits a viscosity of 25000 to 45000 mPa s, preferably of 30000 to 40000 mPa s and particularly preferably of 32000 to 38000 mPa in the cooled state.

18. A wire, in particular a conductive wire, coated with an electro-insulating varnish according to one of claims 1 to 8 and/or with an electro-insulating varnish produced using a method according to claims 9 to 17.

19. An assembly, in particular a coil with a wire or else a conductive wire according to claim 18.

## Revendications

1. Peinture isolante électrique, destinée notamment à revêtir des fils métalliques, la peinture comportant un polymère de base du groupe « polyamide-imide, polyester-imide, polyester, polyamide, polyuréthane, poly-imide, polyesteramide-imide, poly-époxyde », le polymère de base étant modifié avec des unités de modification polymères sous la forme d'au moins deux différents polysiloxanes,
deux polysiloxanes présentant un nombre différent d'unités Si, le nombre des unités Si du polysiloxane à chaîne plus longue étant supérieur de 1,5 fois à 2,5 fois, de préférence de 1,7 fois à 2,3 fois au nombre des unités Si du polysiloxane à chaîne plus courte,
le polysiloxane à chaîne plus longue comportant de 140 à 200 unités Si, le polysiloxane à chaîne plus courte comportant plus de 65 unités Si et moins de 110 unités Si et la viscosité de la peinture (prête à l'application) étant de 650 à 1500 mPa s, de préférence de 800 à 1350 mPa s et de manière très préférentielle, de 850 à 1300 mPa s.

2. Peinture isolante électrique selon la revendication 1, la viscosité de la peinture (prête à l'application) étant de 900 à 1250 mPa s et de préférence, de 950 à 1200 mPa s.

3. Peinture isolante électrique selon l'une quelconque des revendications 1 ou 2, la part en matières solides de la peinture (prête à l'application) s'élevant à de 22 à 35 % en poids, de préférence à de 23 à 33 % en poids et de manière particulièrement préférentielle à de 24 à 31 % en poids.

4. Peinture isolante électrique selon l'une quelconque des revendications 1 à 3, la part des unités de modification polymères ou des polysiloxanes dans le polymère de base modifié s'élevant à de 10 à 30 % en poids, de préférence à de 15 à 25 % en poids.

5. Peinture isolante électrique selon l'une quelconque des revendications 1 à 4, le nombre des unités Si du polysiloxane à chaîne plus longue s'élevant à de 143 à 165 et étant supérieur de préférence à 140 et de manière très préférentielle, à 145.

6. Peinture isolante électrique selon l'une quelconque des revendications 1 à 5, le nombre des unités Si du polysiloxane à chaîne plus courte étant supérieur à 70.

7. Peinture isolante électrique selon l'une quelconque des revendications 1 à 6, le polysiloxane à chaîne plus longue et/ou le polysiloxane à chaîne plus courte étant un polysiloxane linéaire ou non ramifié.

8. Peinture isolante électrique selon l'une quelconque des revendications 1 à 7, le polymère de base étant un polyamide-imide et/ou un polyester-imide.

9. Procédé, destiné à la fabrication d'une peinture isolante électrique, notamment d'une peinture isolante électrique selon l'une quelconque des revendications 1 à 8 et notamment d'une peinture isolante électrique destinée au revêtement de fils métalliques, au moins un premier monomère avec au moins un premier groupe fonctionnel avec au moins deux polysiloxanes avec au moins un groupe fonctionnel avec au moins deux polysiloxanes à nombre différents d'unités Si et avec au moins un groupe réactif étant transformé en des produits intermédiaires de polysiloxane, les produits intermédiaires de polysiloxane étant transformés ensuite avec au moins un deuxième monomère avec au moins un deuxième groupe fonctionnel,
le premier monomère étant mélangé d'abord avec un premier polysiloxane et ensuite, après une période d'au moins 2 minutes, de préférence d'au moins 4 minutes, avec un deuxième polysiloxane (opportunément sous brassage), les deux polysiloxanes se différenciant l'un de l'autre dans le nombre de leurs unités Si d'au moins 50 unités Si, de préférence d'au moins 60 unités Si, les deux polysiloxanes comportant un polysiloxane à chaîne plus longue avec de 140 à 200 unités Si, ainsi qu'un polysiloxane à chaîne plus courte, avec plus de 65 unités Si et moins de 110 unités Si,
et à partir du premier monomère et du deuxième monomère étant formées des chaînes de polymère de base, au moins une partie desdits polymères de la chaîne de base étant modifiée avec un polysiloxane ou avec les polysiloxanes (chaînes de polysiloxanes).

10. Procédé selon la revendication 9, les polysiloxanes comportant chacun au moins un (de préférence, chacun au moins deux) groupe(s) réactif(s) du groupe « groupe hydroxy (-OH), groupe carboxyle (-COOH), groupe amine (-NH2) ».

11. Procédé selon l'une quelconque des revendications 9 ou 10, au moins le premier monomère étant mélangé avec l'un des deux polysiloxanes (de préférence, avec le polysiloxane à chaîne plus courte), le premier monomère étant présenté ou ajouté en excédent et de manière recommandée, la quantité de substances (en moles) du premier monomère s'élevant à au moins 50 fois, de préférence, à au moins 80 fois et de manière particulièrement préférentielle à au moins 100 fois la quantité de substances (en moles) du polysiloxane à chaîne plus courte.

12. Procédé selon la revendication 11, après, le mélange du premier monomère avec un ou avec le premier polysiloxane, le mélange qui en résulte étant mélangé ensuite avec l'autre, respectivement avec le deuxième polysiloxane (de préférence avec le polysiloxane à chaîne plus longue), le premier monomère étant présent également en excédent, par rapport audit deuxième polysiloxane et de manière recommandée, la quantité de substance (en moles) du premier monomère ajouté au départ s'élevant à au moins 100 fois, de préférence à au moins 150 fois et de manière particulièrement préférentielle, à au moins 180 fois la quantité de substance (en moles) du deuxième polysiloxane à chaîne plus longue.

13. Procédé selon l'une quelconque des revendications 9 à 12, au moins un polysiloxane (de préférence deux ou les deux polysiloxanes) étant mis en oeuvre sous la forme d'une solution du polysiloxane dans un solvant, (de préférence dans un solvant non polaire) (notamment dans du xylène en tant que solvant).

14. Procédé selon l'une quelconque des revendications 9 à 13, après l'ajout du deuxième monomère, l'ensemble du mélange (mélange réactif) étant maintenu sur une période d'au moins 90 mn, de préférence sur une période d'au moins 100 mn à une température de 110 à 120 °C.

15. Procédé selon l'une quelconque des revendications 9 à 14, après l'ajout du deuxième monomère, l'ensemble du mélange (mélange réactif) étant maintenu à une température élevée (de préférence à une température comprise entre 110 et 120 °C) jusqu'à ce que le premier groupe fonctionnel du premier monomère ne soit plus traçable.

16. Procédé selon la revendication 15, après l'ajout du deuxième monomère, l'ensemble du mélange (mélange réactif) étant maintenu à une température élevée (de préférence à une température comprise entre 110 et 120 °C) jusqu'à ce que (lors de la mise en oeuvre d'un diisocyanate en tant que premier isocyanate monomère), notamment une bande isocyanate ne soit plus traçable dans le spectre IR.

17. Procédé selon l'une quelconque des revendications 9 à 16, après l'ajout du deuxième monomère (et de préférence après traitement selon les revendications 15 et/ou 16), le mélange étant maintenu à une température de 125 à 135 °C jusqu'à ce que le mélange refroidi présente une viscosité de 25.000 à 45.000 mPa s, de préférence de 30.000 à 40.000 mPa s et de manière particulièrement préférentielle, de 32.000 à 38.000 mPa s.

18. Fil métallique, notamment fil métallique conducteur, revêtu d'une peinture isolante électrique selon l'une quelconque des revendications 1 à 8 et/ou d'une peinture isolante électrique, fabriquée d'après un procédé selon les revendications 9 à 17.

19. Groupe, notamment bobine, pourvue d'un fil métallique ou d'un fil métallique conducteur selon la revendication 18.
